Europäisches Patentamt

European Patent Office

Office européen des brevets

(11) Publication number: **0 020 308**
A1

# EUROPEAN PATENT APPLICATION

(21) Application number: 80830022.2

(22) Date of filing: 14.04.80

(51) Int. Cl.³: **B 60 R 13/02,** F 16 B 21/09

(30) Priority: 27.04.79 IT 482179

(71) Applicant: Morello, Sergio, Via Passione, 9, Milano (IT)

(43) Date of publication of application: 10.12.80
Bulletin 80/25

(72) Inventor: Morello, Sergio, Via Passione, 9, Milano (IT)

(84) Designated Contracting States: **AT BE CH DE FR GB LI
LU NL SE**

(74) Representative: Zorzoli, Franco, c/o BUGNION S.p.A.
Via Vincenzo Monti 55, I-20123 Milan (IT)

(54) Device for anchoring foam material panels to a relevant supporting structure.

(57) Device for anchoring panels in foam material to a relevant supporting structure of the type comprising a pin equipped on one part with an elastically deformable head and protrusions to fix said pin to a bushed element suitable to be buried in the material forming the essentially cylindrical panel with an axial through hole and a rabbet cornice protruding from its outside side surface, said bushed element presenting a breaking affecting its entire thickness and only part of its lenght of its cylindrical wall, which communicates with an annular recessing, between the walls of which the terminal disk-shaped head of said pin is engaged.

- 1 -

Device for anchoring foam material panels to a relevant supporting structure

This invention refers to a device for anchoring foam material panels to a relevant supporting structure, in particular to fix and seal covering panels to motor-vehicle doors.

Technical progress in the car sector has led to the use of synthetic foam materials, e.g. foam polyurethane, to produce different elements to pad and/or cover car parts, e.g. dashboard and inside door panels. If the use of these materials has, on one hand, produced an overall improvement in the motor-vehicle, as regards sound insulation, antishock protection, etc., it has, on the other, created numerous problems connected with the fixing and anchoring technique, even temporary, of said elements to the relevant supporting structures.

Taking into particular consideration the inside panels covering sealing motor-vehicle doors, one problem which manufacturers have had to face is that of anchoring coupling devices to them, which, as in the technique for panels obtained with traditional materials, allow panels to be fixed to the relevant supporting structures, which are, by rule, supplied with frameworks which form an integral part of the doors.

In fact, the known type of coupling devices were not very suitable for use with new panels of the abovementioned type as the latter's insufficient stiffness and lack of mechanical resistance did not give sufficient seal guarantees of the coupling of the panel-coupling device, particularly in cases where, once assembled on the door, the panels must be disassembled to permit internal inspection of said door, as often happens when assistance is required on devices operating locks or raising and/or lowering windows, etc.

The absence in known coupling devices of rabbet surfaces, or undercuts, sufficiently extended, could, in fact, be the cause of breakage or at any rate panel lesions, in the latter's detachment phase from the door, in correspondence with the coupling zones with these devices, consequently gravely prejudicing their being stably repositioned in work, and, at times, making it necessary to replace damaged panels.

When designing new coupling devices suitable for use with the new panels and therefore capable of overcoming the abovementioned drawbacks, manufacturers have had to face a special problem of coupling panels to coupling devices, due to the construction technique of the new panels. In fact, these are obtained in a single pressing operation using dies which already define the final structure of the panel concerned, and inside which the desired material is injected.

It was therefore out of the question to design and use devices to be fixed at the rear of pressed panels.

The abovementioned problems have been overcome with various technical solutions, using sleeves as coupling elements, hollow with a hole or at any rate an opening in front, suitable to be engaged and axially inserted in front of the sleeve in the head of a pin of the type already known for fixing traditional panels, which may be engaged in the supporting framework of the panel supplied by the door.

These sleeves are so shaped that they can be buried in the material forming the desired panel in its pressing phase and are peripherally and externally equipped with rabbet surfaces which prevent them moving in any way with respect to the panel formed.

Obviously, the number of sleeves used for each panel depends upon the number of fixing points foreseen in the door for which the panel is to be used. Although these technical solutions make a notable contribution to the solution of the abovementioned problems, they cannot be considered optimal. In fact, sleeve-pin coupling is rather laborious, and, in the eventual detachment phase of the panel from the door, the action required to disengage the sleeve from the pin is notable and may cause even permanent panel deformation.

The purpose of this invention is to solve the abovementioned problems and overcome all the abovementioned drawbacks, supplying a device to anchor panels of the type indicated to a relevant supporting structure, e.g. a car door, simple and cheap to produce and permitting adaptation and stable anchoring of such panels with the possibility of subsequent extremely simple disassembly and without prejudicing panel integrity in any way.

A further purpose of this invention is to supply a device of the type indicated, through which it is possible to obtain an initial position, with respect to the relevant panel, of coupling elements with pin, used to stably couple the panels to the relevant supporting structures, before obtaining these stable couplings, to facilitate initial research of the fixing points prearranged on these supporting structures.

All said purposes are achieved by the device in this invention of the type comprising a pin, one part of which is equipped with elastically deformable protrusions or head to fix the actual pin of the supporting panel structure for coupling of this end inside a corresponding seat obtained on this structure, with a flange or rabbet wall being foreseen upstream from this part limiting penetration of said part of the pin in this seat, characterized by the fact that it comprises a bushed element, suitable to be buried in the material forming the essentially cylindrical panel and presenting an axial through hole, and, corresponding to the front surface destined to face the interior of the panel, a rabbet cornice protruding from its outside side surface, said bushed element presenting a breaking in the cylindrical part, affecting its entire thichness and only part of its length and axially developing

0020308

- 4 -

to it from the front surface opposite the one from which said rabbet cornice develops, said breaking communicating with an annular recessing, obtained in the interior and intermediate parts of the bushed element and coaxial to said through hole, through an opening obtained on the cylindrical wall of the bushed element, of the same length or longer than the maximum diameter of said recessing and its width equalling the distance between its facing walls, and by the fact that said pin presents, on the part opposite that equipped with elastically deformable protrusions or heads, a terminal head which follows a shank with lower diameter than the axial hole in the bushed element and the width of said breaking, said terminal head being essentially disk-shaped with diameter lower than  the maximum diameter of the recessing presented by the bushed element and of such a thickness as to be engaged between the front facing walls of the recessing through the slit connecting same to the exterior, in correspondence with the outer side surface of the bushed element.

Another feature of this device is that the outside cylindrical surface of the bushed element is of truncated cone shape with the largest diameter at the front surface from which said rabbet cornice develops.

Due to its special outside configuration, the bushed element has an ample undercut, which is opposed to the unthreading of said bushed panel from the panel, guaranteeing stable coupling. The opening obtained on the side surface of the terminal head of the pin to be fixed directly to the supporting structure of the panel makes it equally to fix the panel in question in place, with the possibility of quickly disassembling it by simply pushing the side of the panel to free the head of said pin from its seat in the cylindrical recessing presented by the bushed element.

Any panel deforming action is thus prevented as the panel is not stressed in this phase perpendicularly to its rabbet level against the door. The sole condition to be respected is that, in the prearrangement phase on the die, during panel pressing, the bushed elements are all positioned in the same way and that, once the panel has been connected to the desired door, it can, if necessary, slide in a required predetermined direction, e.g. upwards or longitudinally to the door, according to the positioning of these bushed elements.

The features of the device in this invention will now be illustrated more fully in the following description of a preferred, but non-exclusive, type of construction, referring to the attached drawings in which:

- fig. 1 shows a perspective exploded view of the abovementioned device with sections cutaway to emphasize the others and with its components arranged on interinclined axes and on different levels;

- fig. 2 shows an enlarged front view of the bushed element in fig. 1;

- fig. 3 shows a comprehensive enlarged side view of the device in fig. 1 with parts cutaway to emphasize the others, already incorporated in a panel fixed to a motor-vehicle door only partially visible;

- fig. 4 is a schematic diagram of a front view of a possible type of panel applied to a car door where the thin line indicates the various anchoring devices prearranged on the inner wall of this panel and the broken line the position which the panel must take up to be detached from the door.

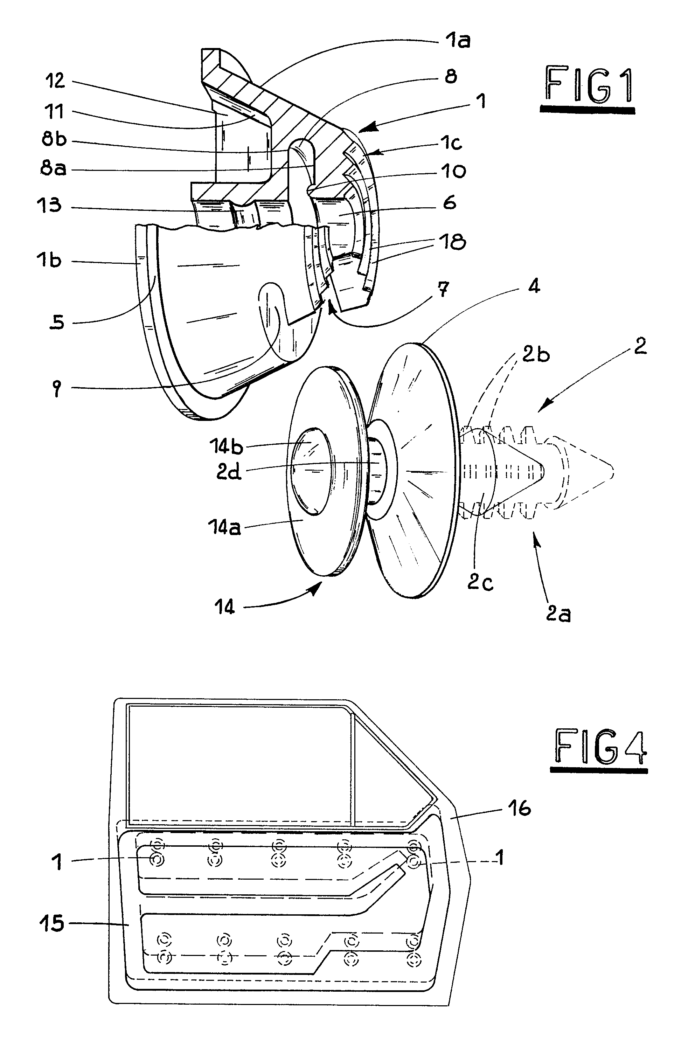

In these drawings, in particular in figs. 1, 2 and 3, number 1 indicates the bushed elements constituting the first of the two elements forming this device and number 2 the pin to be engaged in the structure of this panel and in said bushed element in order to anchor the panel to said structure.

This pin is thus the second element forming this device.

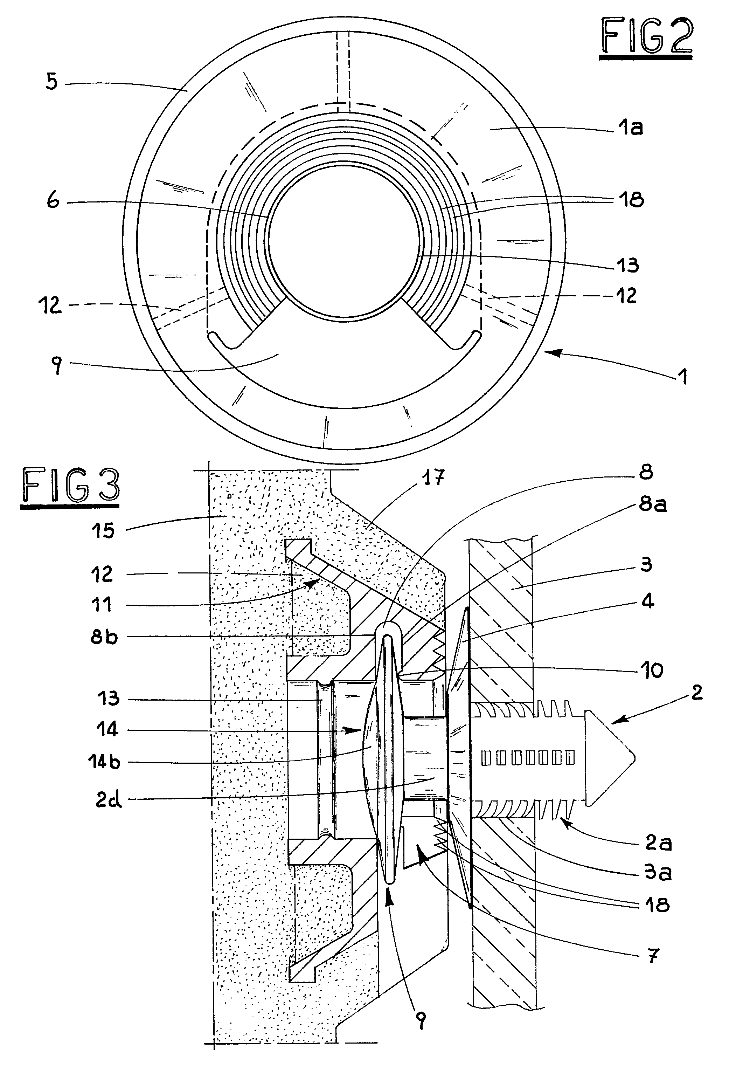

The part 2a of the pin 2 is shown in fig. 1 with a narrow line according to two possible solutions offered in technical notes, one shown in continuous, the other in broken line, which make it possible to have this part of the pin equipped with a series of elastically deformable tongues 2b or a head 2c to fix this pin to the supporting structure of a certain panel, this structure being indicated with 3 in fig. 3.

Also according to technical notes, upstream from the part 2a the pin 2 presents a rabbet flange or wall which limits penetration of the part 2a of the pin 2 inside the suitable seat 3a obtained on the supporting structure 3.

The flange 4 is preferably bell-shaped and is elastically deformable to permit the thickness of the supporting structure 3 to be gripped perfectly between it and the tongues 2b or the head 2c of the pin 2.

The bushed element 1 is essentially cylindrical and its outside side surface 1a is of truncated cone shape with the largest diameter at the front surface 1b to face the panel interior to which, as will be seen later, the bushed element 1 will be connected.

At the front surface 1b the bushed element 1 presents an annular rabbet cornice 5 protruding from its outside side surface 1a.

The bushed element 1 also presents an axial through hole 6 and, on the cylindrical wall, a circular sector breaking 7 affecting the entire cylindrical wall thickness and only part of its length.

The breaking 7 develops from the front surface 1c of the bushed element 1, opposite the front surface 1b, and communicates with an annular recessing 8 obtained inside and in the intermediate part of the bushed element 1, coaxial to the through hole 6.

The breaking 7 and the annular recessing 8 are connected by means of an opening 9 on the cylindrical wall of the bushed element 1, its length slightly exceeding the maximum diameter of the annular recessing 8 and its width equalling the distance between the facing walls 8a and 8b of this recessing.

The number 10 indicates an annular moulding on the wall 8a of the recessing 8 corresponding to the edge near the hole 6, which is of toroidal section, and stretches towards the interior of the recessing 8. This moulding will be described later.

Correspondingly to the front surface 1b, the bushed element 1 also presents a lightening hollow space 11, interrupted, in the case illustrated, by a series of radial stiffening tongues 12, and inside the axial hole 6 presents an annular moulding 13, whose function will be explained later, when a description will be given of the method used to insert the bushed elements 1 in a prefixed die producing a desired panel.

Also in figs. 1, 2 and 3, the pin 2 of the part opposite the part 2a presents a terminal head 14 which leads to a shank 2d, coaxial to the part 2a and with a diameter smaller than the axial hole 6 presented by the bushed element 1 and to the minimum width of the breaking 7.

The terminal head 14 is essentially disk-shaped with smaller diameter than the maximum diameter of the recessing 8 presented by the bushed element 1, and, in the case illustrated, presents a thickness gradually decreasing from the centre towards the outer edge.

Said thickness is, however, such that the head terminal 14 may be coupled between the front facing walls 8a and 8b of said recessing 8 by means of the slit 9 communicating said recessing 8 with the exterior and with the breaking 7 corresponding to the outside side surface of the bushed element 1.

The terminal head presents, correspondingly to the front surface 14a, and protruding from same, a centre portion of spherical cap shape 14b, its base diameter being equal to or slightly lower than that of the hole 6 presented by the bushed element 1.

Having terminated the device description, a description will now be given of how the bushed element 1 is attached to a desired panel and how the actual panel is assembled and disassembled from the relevant supporting structure.

In figs .3 and 4, the number 15 indicates a possible type of panel to cover and seal a door 16 of a motor-vehicle.

As already mentioned in the introduction, the panel 15 is obtained in only one pressing operation and the bushed elements 1, of the same number as the anchoring points of said panel to said door, are suitably positioned on the die, all in the same way, and with a suitable core inserted in the hole 6, tightly wound in the moulding 13.

Said core is necessary in the panel pressing phase to prevent die-in-

jected material leaking from the hole, thus clogging them.

A second core will then be provided to close the breaking 7 and the opening 9 to avoid clogging in the panel pressing phase.

The die is designed to ensure that, when the panel is pressed, each bushed element 1 remains in a protrusion 17 presented by the inside supporting surface of the same panel (see fig. 3), this protrusion being wound round the entire cylindrical wall 1a of the bushed element 1 and presenting a breaking and opening corresponding to the breaking 7 and the opening 9.

The bushed element 1 is then produced in such a way that it presents a series of annular recesses 18 on the front surface 1c in which corresponding die protrusions are engaged, to prevent injected material spreading on these surfaces during the pressing phase of the panel 15.

When panel 15 is complete, to fix it to the supporting structure 3, for example on the door 16, a pin 2 need only first be fixed to each bushed element 1 and the part 2a of these pins forced into the suitable seats previously foreseen on this structure and arranged, in corresponding position to the bushed elements 1, on the panel 15.

Each pin 2 is easily fixed to the relevant bushed element 1 by threading its terminal head 14 and shank 2d in the slits 9, through the respective breaking 7 on the bushed element 1, thrusting the terminal head 14 inside the annular recessing 9 until the cap 14b is automatically inserted in the hole 6 (see fig. 3), remaining stably engaged for the thrust exerted by the moulding 10, presented by the wall 8a of said recessing 8, against the surface of the terminal head 14 opposite its front surface 14a.

In this way, the pin 2 is stably positioned coaxially to the bushed element 1 with the possibility, however, thanks to the difference between the diameters in head 14, recessing 8, shank 2d and hole 6, of adaptation to slight movements which permit easy research and recovery of any minimum errors of and between the points at which the panel is fixed to the structure 3.

These may be fixed, as shown in the technical note, by simple forced insertion of the part 2a of the pins 2, associated with the bushed elements 1, in their seats foreseen in the structure 3.

To disassemble the panel 15, as shown in fig. 4, from the door 15, a side thrust (upwards in the case illustrated) is sufficient to obtain simultaneous disengagement of the terminal head 14 of all pins 2 foreseen, from the relevant recessing 8, until this terminal head and the shank 2d are unthreaded from the bushed elements 1 through the opening 9 and the breaking 7.

This may be done with no special effort due to the reduced total adherence surface between the terminal head 14 and the recessing 8, which is, in practice, reduced to the sum of the contact surfaces between the cap 14b and the edge of the hole 5 in contact with it and between the moulding 10 and the facing surface of the terminal head 14, this total adherence surface being, however, sufficient to guarantee stable panel anchorage and fixing.

To reassemble the panel 15, it is sufficient to remove the pins 2 from their seats in the structure 3 and repeat the coupling operations with the bushed elements, as described above.

It appears clear from the above that the device in this invention fully fulfils the purposes indicated.

Obviously, both the bushed element 1 and the pin 2 can be produced in any suitable material, preferably in plastic.

The invention can be manufactured in different constructive forms than those shown in the drawings without diverging from the protective ambit of the invention and from the following claims.

C L A I M S

1) Device to anchor panels (15) in foam material to a relevant supporting structure (3) of the type comprising a pin (2), one part equipped with elastically deformable protrusions (2b) or a head (2c) to fix this pin to the supporting structure (3) of the panels (15), to engage this end in a corresponding seat (3a) on this structure (3), a flange (4) or rabbet wall being foreseen upstream from this part, delimiting penetration of said part of the pin in this seat (3a), characterized by the fact that it comprises a bushed element (1), suitable to be buried in the material forming the panel (15), mainly cylindrical and presenting an axial through hole (6), and, corresponding to the front surface (16) to face the interior of the panel (15), a rabbet cornice (5), protruding from its outside side surface (1a), said bushed element (1) presenting a breaking (7) on its cylindrical wall which affects its entire thickness and only part of its length, developing axially to it from the front surface (1c) opposite that (1b) from which said rabbet cornice (5) develops, said breaking (7) communicating with an annular recessing (8), obtained in the inner and intermediate parts of the bushed element (1) and coaxial to said through hole (6), through an opening (9) obtained on the cylindrical wall of the bushed element (1), of equal length or longer than the maximum diameter of the same recessing (8) and with width equal to the distance between its facing walls (8a-8b) and by the fact that on the part opposite that (2a) equipped with elastically deformable protrusions (2b) or heads (2c) said pin (2) presents a terminal head (14) which follows a shank (2d) with lower diameter than the axial hole (6) presented by the bushed element (1) and to the width of said breaking (7), said terminal head (14) being essentially disk-shaped with diameter lower than the maximum diameter of the recessing presented by the bushed element (1) and so thick as to be engaged between the front facing walls (8a-8b) of this recessing (8) through the slit (9) communicating the latter with the exterior, in correspondence with the outside side surface (1a) of the bushed element (1).

2) Device according to claim 1, characterized by the fact that the outside side surface (1a) of the bushed element is of truncated cone shape with a higher diameter than the part of the front surface (1b) from which said rabbet cornice (5) develops.

3) Device according to the previous claims, characterized by the fact that said essentially disk-shaped terminal head (14) presented by the pin (2) which may be fixed directly to the supporting element (3) of the panel (15) and inserted in the recessing (8) presented by the bushed element (1), presents, in correspondence with the front surface (14a) and protruding from same, a centre cap-shaped portion (14b) with a base diameter equal to, or slightly smaller than, that of the through hole (6) presented by the bushed element (1).

4) Device according to the previous claims, characterized by the fact that at least the wall (2) of the recessing (8) presented by the bushed element (1), destined to be totally or partly fouled by the surface of the head terminal (14) of said pin (2) opposite the front surface (14a) of the head itself, presents an annular moulding (10) protruding towards the interior of the recessing and obtained in a corresponding position to the edge of this wall near said through hole (6) presented by the bushed element (1).

5) Device according to the previous claims, characterized by the fact that the terminal head (14) of the pin (2) to be inserted in the recessing (8) presented by the bushed element (1) presents a thickness which gradually decreases from the centre towards the outer edges.

6) Device according to the previous claims, characterized by the fact that a toroidal sectioned protruding annular moulding (13) is foreseen on the wall of the through hole (6) presented by the bushed element (1), practically corresponding to the front surface (1b) of the same bushed element (1) from which said rabbet cornice (5) develops, defining a ring tightly wound around a core presented by the die used to produce the panel (15), to which the bushed element (1) must be integral, being engaged in said hole (6) with this bushed element (1) positioned in the actual die before the panel pressing phase.

7) Device according to the previous claims, characterized by the fact that, correspondingly to the front surface (1b) from which said rabbet cornice (5) develops, the bushed element (1) presents a lightening hollow space (11), interrupted by at least one tongue (12) developing inside it, radially to the bushed element (1).

0020308

1/2

FIG 1

1a
12
11
8b
8a
13
1b
5
9
8
1
1c
10
6
18
7
4
14b
2d
14a
14
2b
2
2c
2a

FIG 4

16
1
1
15

FIG 2

FIG 3

European Patent
Office

**EUROPEAN SEARCH REPORT**

Application number

0020308
EP 80 83 0022

| | DOCUMENTS CONSIDERED TO BE RELEVANT | | CLASSIFICATION OF THE APPLICATION (Int. Cl. ⁴) |
|---|---|---|---|
| Category | Citation of document with indication, where appropriate, of relevant passages | Relevant to claim | |
| | <u>FR - A - 2 109 202</u> (GACON FRERES)<br>* Whole document *<br><br>-- | 1,7,8 | B 60 R 13/02<br>F 16 R 21/09 |
| | <u>DE - B - 1 243 536</u> (FORD-WERKE AG)<br>* Whole document *<br><br>-- | 1,5 | |
| | <u>US - A - 3 249 973</u> (SECKERSON)<br>* Whole document *<br><br>-- | 1 | |
| A | <u>FR - A - 1 338 292</u> (H.O. LUNDQVIST)<br>* Whole document *<br><br>-- | 1 | TECHNICAL FIELDS SEARCHED (Int.Cl. ⁴)<br><br>B 60 R 13/02<br>F 16 B 21/09<br>     12/22<br>     12/34 |
| A | <u>FR - A - 1 411 910</u> (TREPATENT A/S)<br>* Whole document *<br><br>-- | 1 | |
| L | <u>DE - A - 2 749 862</u> (GACON S.A.)<br>(filing date 08-11-1977, published 10-05-1979)<br><br>---- | | |

X | The present search report has been drawn up for all claims

| Place of search | Date of completion of the search | Examiner |
|---|---|---|
| The Hague | 30-07-1980 | CORMACI |

EPO Form 1503.1  06.78